# EUROPÄISCHE PATENTANMELDUNG

(11) **EP 2 400 175 A1**
(43) Veröffentlichungstag der Anmeldung: **28.12.2011**
(21) Anmeldenummer: 10006564.8
(22) Anmeldetag: 24.06.2010
(51) Int. Cl.: F16C 33/20, B29C 45/17

(54) **Verfahren zum Herstellen eines Gleitlagerelements**

(71) Anmelder: KS Gleitlager GmbH, 68789 St. Leon-Rot (DE)
(72) Erfinder: Baur, Wolfgang, 76698 Ubstadt-Weiher (DE); Häcker, Stefan, 76698 Ubstadt-Weiher (DE)
(74) Vertreter: Friz, Oliver

(57) **Zusammenfassung**

Die Erfindung betrifft ein Verfahren zum Herstellen eines Gleitlagerelements (2) mit einem Gleitlagerverbundwerkstoff (4), umfassend eine metallische Stützschicht (6), eine darauf aufgesinterte metallische poröse Trägerschicht (8) und ein in die Poren der Trägerschicht (8) eingebrachtes Gleitschichtmaterial (26) mit einer Polymerbasis und mit Füllstoffen, wobei das Gleitlagerelement aus einem Flachmaterial ausgestanzt oder abgelängt wird, wobei zunächst das Flachmaterial mit Stützschicht (6) und poröser Trägerschicht (8) erhalten wird, wobei die poröse Trägerschicht (8) aus verrundeten metallischen Partikeln derart gebildet wird, dass sie in Z-Richtung nur höchstens drei Lagen von miteinander versinterten metallischen Partikeln aufweist, und dass aus dem Flachmaterial die Form und Gestalt eines Rohlings (20) des Gleitlagerelements (2) durch Ausstanzen oder Ablängen und gegebenenfalls Umformen hergestellt wird und dass daran anschließend der Rohling (20) in einem Spritzgießverfahren mit dem Gleitschichtmaterial (26) mit Füllstoffen beaufschlagt wird.

## Beschreibung

Die Erfindung betrifft ein Verfahren zum Herstellen eines Gleitlagerelements mit einem Gleitlagerverbundwerkstoff, umfassend eine metallische Stützschicht, eine darauf aufgesinterte metallische poröse Trägerschicht und ein in die Poren der Trägerschicht eingebrachtes Gleitschichtmaterial mit einer Polymerbasis und mit Füllstoffen, wobei das Gleitlagerelement aus einem Flachmaterial ausgestanzt oder abgelängt wird.

Seither wurden Gleitlagerelemente der hier in Rede stehenden Art, insbesondere Anlaufscheiben oder Buchsen, insbesondere Bundbuchsen, dadurch gefertigt, dass der Gleitlagerverbundwerkstoff in Form eines Flachmaterials fertig hergestellt wurde und aus diesem Flachmaterial dann das Gleitlagerelement, beispielsweise die Anlaufscheibe, als platinenförmiger Abschnitt ausgestanzt, ausgeschnitten oder abgelängt wurde, der dann das fertige Gleitlagerelement bildet oder gegebenenfalls einer weiteren formgebenden Bearbeitung, insbesondere in einem Biegerollwerkzeug, zugeführt wurde. Jedenfalls wurde das Gleitschichtmaterial in die Poren der Trägerschicht eingebracht, und erst danach erfolgte das Ausstanzen oder Ablängen und gegebenenfalls Verformen des an sich fertigen Gleitlagerverbundwerkstoffs zur Bildung des Gleitlagerelements.

Insbesondere bei der Herstellung von Anlaufscheiben, die in Form eines Kreisrings oder eines etwa 180° umfassenden Kreisringsegments aus dem Flachmaterial ausgestanzt werden, entsteht ein nicht unwesentlicher Schnittabfall, und zwar sowohl bei dem Stützschichtmaterial und dem Trägerschichtmaterial als auch bei dem Gleitschichtmaterial auf Polymerbasis.

Aus DE 196 15 757 A1 ist eine Buchse aus einem Metall/Kunststoffmaterial bekannt, bei der die metallische Stützschicht mit radialen Durchgangsöffnungen versehen ist, die sich nach radial außen erweitern; die Innenseite und die Durchgangsöffnungen sind mit Kunststoffmaterial ausgespritzt. Die Herstellung ist aufgrund der sich erweiternden Öffnungen extrem aufwändig, und die Durchlöcherung der Stützschicht ist für die meisten Anwendungen nicht akzeptabel.

Der vorliegenden Erfindung liegt die Aufgabe zugrunde, das eingangs beschriebene gattungsgemäße Verfahren dahingehend zu verbessern, dass es wirtschaftlicher ausführbar ist. Diese Aufgabe wird bei dem gattungsgemäßen Verfahren erfindungsgemäß dadurch gelöst, dass zunächst das Flachmaterial mit Stützschicht und poröser Trägerschicht erhalten wird, wobei die poröse Trägerschicht aus verrundeten metallischen Partikeln derart gebildet wird, dass sie in Z-Richtung nur höchstens drei Lagen von miteinander versinterten metallischen Partikeln aufweist, und dass aus dem Flachmaterial die Form und Gestalt eines Rohlings des Gleitlagerelements durch Ausstanzen oder Ablängen und gegebenenfalls Umformen hergestellt wird und dass daran anschließend der Rohling in einem Spritzgießverfahren mit dem Gleitschichtmaterial mit Füllstoffen beaufschlagt wird.

Es wird also erfindungsgemäß der Gleitlagerverbundwerkstoff nicht fertig mit polymerem Gleitschichtmaterial hergestellt, sondern es wird zunächst aus dem Verbund aus Stützschicht und poröser Trägerschicht ein Rohling erhalten. Dieser Rohling wird dann in ein Spritzgießwerkzeug eingelegt und im Spritzgießverfahren mit dem Gleitschichtmaterial beaufschlagt.

Im Falle der Herstellung von Anlaufscheiben weist der Rohling dann vorteilhafterweise mit dem Ausstanzen aus dem Flachmaterial seine schlussendliche Form auf. Er braucht lediglich im Spritzgießverfahren mit dem Gleitschichtmaterial beschichtet zu werden. Auf diese Weise kann der Produktionsabfall an Gleitschichtmaterial wesentlich, insbesondere bis zu 80 %, reduziert werden. Im Falle der Herstellung von Gleitlagerelementen, die ausgehend von einer Flachmaterialform noch einer Umformung bedürfen, also Schalen, Buchsen, Bundbuchsen oder kalottenförmige Gleitlagerelemente, insbesondere Topfbuchsen oder Kugelschalen (sphärische Geometrie), wird nach dem Ausstanzen oder Ablängen eines Abschnitts aus dem Flachmaterial eine formgebende Bearbeitung ausgeführt, insbesondere durch Tiefziehen oder durch Bearbeitung in einem Biegerollprozess. Der so gebildete Rohling, der dann die geometrische Gestalt des fertigen Gleitlagerelements aufweist, wird sodann in einem Spritzgießverfahren mit Gleitschichtmaterial zur Bildung des fertigen Gleitlagerelements beaufschlagt.

Es wurde erfindungsgemäß festgestellt, dass es möglich ist, eine poröse Trägerschicht aus aufgesinterten metallischen Partikeln in einem Spritzgießverfahren mit Gleitschichtmaterial zu befüllen, ohne dass hierbei die poröse Trägerschicht Schaden nimmt, sofern sie nur mit höchstens drei Lagen von Partikeln ausgebildet ist, wobei es auch wesentlich ist, dass die Partikel verrundet, also insbesondere rund oder unregelmäßig knollenförmig, nicht jedoch filigran bizarr oder nadelförmig ausgebildet sind. Die verrundeten Partikel werden dann nicht exakt übereinander, jedoch deutlich erkennbar in aneinander angrenzenden Lagen in Z-Richtung übereinander im Zuge des Sinterprozesses fixiert. Sofern höchstens drei Lagen solcher verrundeter Partikel im Spritzgießverfahren mit polymerem Gleitschichtmaterial infiltriert werden, vermag die so gebildete dreidimensionale Struktur den hierbei auftretenden Kräften einerseits standzuhalten und andererseits im Wesentlichen vollständig von dem Gleitschichtmaterial infiltriert zu werden, so dass das Gleitschichtmaterial unlösbar und damit prozesssicher an der dreidimensionalen Struktur der Trägerschicht gehalten wird.

Gemäß einer zweiten Variante der vorliegenden Erfindung, die mit dem unabhängigen Anspruch 2 beansprucht wird, wird anstelle einer aus verrundeten metallischen Partikeln gebildeten aufgesinterten porösen Trägerschicht eine Schicht aus textil verbundenen Metallfilamenten, insbesondere in Form eines Gewebes oder Gewirks, verwendet, die ebenfalls unlösbar auf die Stützschicht aufgebracht, insbesondere aufgesintert wird. Es hat sich gezeigt, dass auch eine solche unterbrochene, also durchgehende Öffnungen bis zur Oberseite der Stützschicht aufweisende Schicht als Trägerschicht zur Verankerung des Gleitschichtmaterials im Wege eines Spritzgießverfahrens geeignet ist. Die durch die textil verbundenen Metallfilamente mit Durchtrittsöffnungen zur Verfügung gestellte Struktur eignet sich für einen Spritzgießvorgang, da sie aufgrund ihres ohnehin flachen Aufbaus wenig zerstörungsanfällig ist. Die durch die Metallfilamente bereitgestellten Verankerungsmöglichkeiten erweisen sich für die intendierten Zwecke als hinreichend.

Die poröse Trägerschicht ist nach beiden Varianten vorzugsweise aus Bronze, insbesondere aus CuSn(4-10), gebildet.

Die aus verrundeten Partikeln gebildete poröse Sinterschicht weist vorteilhafterweise eine Dicke von 0,1 - 0,5 mm auf.

Im Zuge der ersten Erfindungsvariante mit der aus verrundeten Partikeln gebildeten porösen Sinterschicht als Trägerschicht erweist es sich als vorteilhaft, wenn das Porenvolumen der porösen Trägerschicht im Zuge des Spritzgießens reduziert wird, und dann 40 - 60 %, insbesondere 45 - 60 % und weiter insbesondere 47 - 60 % beträgt. Da der Spritzgießvorgang mit einer Druckbeaufschlagung einhergeht, kommt es zu einer Komprimierung der porösen Sinterschicht, die jedoch in Folge der Verwendung verrundeter Partikel in höchstens drei Lagen nicht zu einer Beschädigung, also einem Zerdrücken der porösen Sinterschicht führt, so dass diese gleichwohl im wesentlichen vollständig infiltriert werden kann. Daher wird die Sinterschicht vor dem Spritzgießen mit einem gewissen "Übermaß" an Porosität ausgebildet, um für die

dann erfolgende Kompression quasi vorzuhalten, damit ein verhältnismäßig großes Porenvolumen für das Gleitschichtmaterial zur Verfügung steht, so dass der Widerstand während des Spritzgießens hinreichend gering ist und in der Folge Beschädigungen der dreidimensionalen Struktur vermieden werden können.

Vorteilhafterweise beträgt die Partikelgröße der die Sinterschicht bildenden verrundeten metallischen Partikel 110 - 130 µm.

Die Gesamtwanddicke des Gleitlagerverbundwerkstoffs oder eines hieraus hergestellten Gleitlagers beträgt 0,5 - 5 mm, insbesondere 0,75 - 4 mm und weiter insbesondere 1,0 - 4 mm.

Weiter erweist es sich als vorteilhaft, wenn das Gleitschichtmaterial auf Polymerbasis PEEK als matrixbildende Kunststoffkomponente umfasst (d. h. mehr als 50 Vol.-%, insbesondere mehr als 80 Vol.-% oder insbesondere mehr als 90 Vol.-% der Polymerkomponente ist PEEK). Weitere bevorzugte Zusammensetzungen ergeben sich aus den Patentansprüchen.

Nach einer bevorzugten Ausführungsform umfasst das Gleitschichtmaterial eine Polymermatrix aus PEEK und 10 Gew.-% ZnS, 10 Gew.-% Kohlenstofffasern, 10 Gew.-% Graphit und 10 Gew.-% TiO₂.

Das Verfahren erweist sich als besonders vorteilhaft, wenn es zum Herstellen einer Anlaufscheibe zur Verwendung bei einer Kurbelwelle bei einem Kraftfahrzeugmotor oder bei einer Einspritzpumpe eingesetzt wird. Bei der Herstellung von ebenen und kreisringförmigen Anlaufscheiben fällt nämlich naturgemäß ein hoher Anteil an Schnittabfall an. Daher kann unter Ausführung des erfindungsgemäßen Verfahrens die Wirtschaftlichkeit der Herstellung durch Reduzierung des Verfahrensabfalls an Gleitschichtmaterial wesentlich erhöht werden.

Wenn bei der Herstellung von Gleitlagerelementen, insbesondere Anlaufscheiben, in vorteilhafter Weise Vertiefungen als Ölnuten angebracht werden, so erweist es sich als vorteilhaft, wenn diese Vertiefungen vor dem Spritzgießen des Gleitschichtmaterials, insbesondere durch Spanen oder Prägen, hergestellt werden.

Das erfindungsgemäße Verfahren eignet sich aber in vorteilhafter Weise auch zum Herstellen einer Bundbuchse mit einem Radiallagerteil und einem Axiallagerteil (der Axiallagerteil ist dabei der krempenartige Bund der Buchse). Es erweist sich hier als besonders vorteilhaft, wenn das Gleitschichtmaterial zumindest am Axiallagerteil und gegebenenfalls zusätzlich am Radiallagerteil im Spritzgießverfahren aufgebracht ist. Wenn nämlich die Herstellung der Bundbuchse derart erfolgt, dass zunächst aus einer Platine aus Gleitlagerverbundwerkstoff (Stützschicht + Trägerschicht + Gleitschichtmaterial auf Polymerbasis) eine zylindrische buchsenförmige Gestalt gerollt wird und dann der Bund durch Umlegen eines Randabschnitts nach radial außen um etwa 90° hergestellt wird, so ist die dabei auftretende Materialverformung für einige Gleitschichtmaterialien zu hoch, als dass eine Anhaftung des Gleitschichtmaterials beibehalten werden kann. Das Gleitschichtmaterial neigt zum Abplatzen. Deshalb wird der Axiallagerteil (also der Bund) von Bundbuchsen häufig als separates Bauteil an den zylindrischen Radiallagerteil angeschweißt, was ebenfalls sehr aufwändig ist. Durch das erfindungsgemäße Verfahren ist es grundsätzlich möglich, zuerst die eigentliche Gestalt der Bundbuchse durch Umlegen des Bunds in einem Biege/Rollverfahren herzustellen und erst dann den Axiallagerteil im Spritzgießverfahren mit Gleitschichtmaterial zu beschichten. Die vorstehend erwähnten Probleme treten dabei nicht auf.

Im Zuge dessen ist es auch möglich, nicht nur den Axiallagerteil, sondern zusätzlich auch den Radiallagerteil in einem Spritzgießverfahren mit Gleitschichtmaterial zu beschichten. Alternativ hierzu wäre es denkbar, dass das Flachmaterial nur im Bereich des späteren Radiallagerteils (Zylinderteil, Buchsenteil) mit Gleitschichtmaterial beschichtet wird, dass also der spätere Axiallagerteil/Bundbereich freigelassen und erst nach dem Umlegen des Bunds auf die erfindungsgemäße Weise mit Gleitschichtmaterial beschichtet wird.

In weiterer Ausbildung der Erfindung erweist es sich als vorteilhaft, wenn das Verfahren zum Herstellen eines kalottenförmigen Gleitlagerelements, wie z.B. Topfbuchse oder Kugelschale, angewandt wird, wobei aus dem Flachmaterial ein rondenförmiger Rohling ausgestanzt und auf Kalottenform tiefgezogen und dann im Spritzgießverfahren mit dem Gleitschichtmaterial mit Füllstoffen beaufschlagt wird.

Weitere Einzelheiten, Merkmale und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
Figur 1 eine schematische Darstellung des erfindungsgemäßen Prozessablaufs,
Figur 2a eine Draufsicht auf eine erfindungsgemäß hergestellte Anlaufscheibe,
Figur 2b eine Schnittansicht der Anlaufscheibe nach Figur 2a mit Schnittebene A-A und
Figur 3 eine schematische Darstellung des erfindungsgemäßen Prozessablaufs nach einer zweiten Variante der Erfindung.

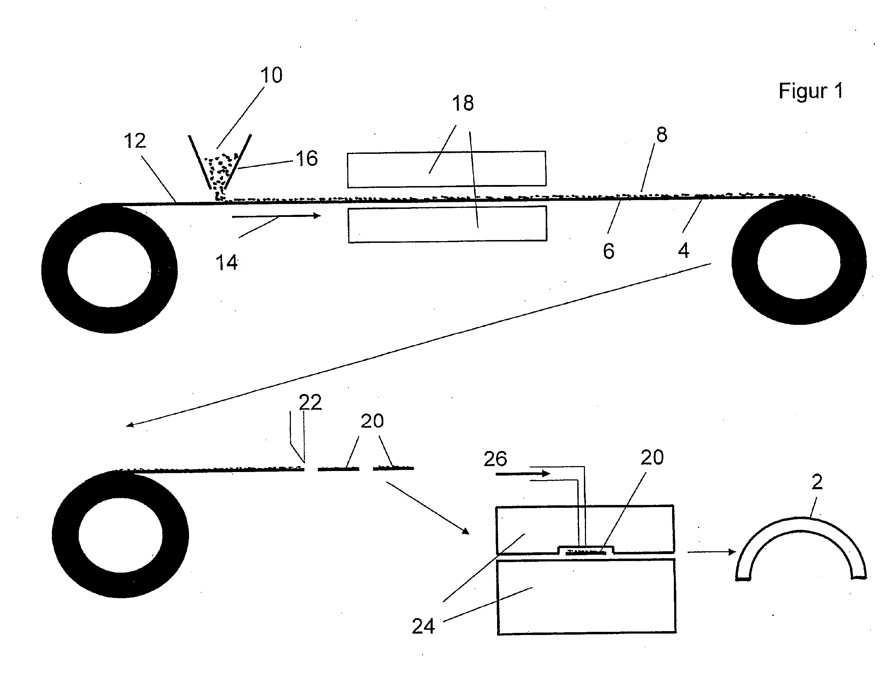

Figur 1 verdeutlicht schematisch die Aufeinanderfolge der Verfahrensschritte nach dem erfindungsgemäßen Verfahren zum Herstellen eines Gleitlagerelements 2 mit einem Gleitlagerverbundwerkstoff 4 umfassend eine metallische Stützschicht 6, vorzugsweise aus Stahl, und eine darauf aufgebrachte metallische poröse Trägerschicht 8, vorzugsweise aus aufgesintertem Bronzepulver 10, und mit einem in die Poren der Trägerschicht 8 eingebrachten Gleitschichtmaterial 26. Ein die metallische Stützschicht 6 bildendes Flachmaterial 12 wird in einer Maschinenrichtung 14 insbesondere, jedoch nicht notwendigerweise, kontinuierlich endlos zugeführt. Es sei ausdrücklich darauf hingewiesen, dass auch eine abschnittsweise Fertigung denkbar und vorteilhaft sein kann. Dieses Flachmaterial 12 wird dann mit Bronzepulver 10 in Form verrundeter Partikel aus einer Beschickungseinrichtung 16 bestreut, so dass im wesentlichen und überwiegend eine Dicke von nur drei Lagen der Partikel gebildet wird. Das Bronzepulver 10 wird in einer Sinterstrecke 18 auf die Stützschicht 6 aufgesintert. Schließlich werden Rohlinge 20 in einer Schneidstation 22 ausgestanzt oder abgelängt. Ein dabei anfallender beträchtlicher Schnittabfall ist nicht dargestellt. Diese Rohlinge 20 haben im beispielhaft dargestellten Fall bereits die Gestalt der fertigen Gleitlagerelemente 2. Sie werden in ein Spritzgießwerkzeug 24 eingelegt und in einem Spritzgießverfahren mit dem eingangs erwähnten Gleitschichtmaterial 26 beaufschlagt bzw. beschichtet, wobei das Gleitschichtmaterial 26 in die Poren der dreidimensionalen porösen Trägerschicht 8 eingebracht wird. Nach dem Öffnen des Spritzgießwerkzeugs 24 wird das fertige Gleitlagerelement 2, im beispielhaften Fall in Form einer 180° umfassenden Anlaufscheibe erhalten.

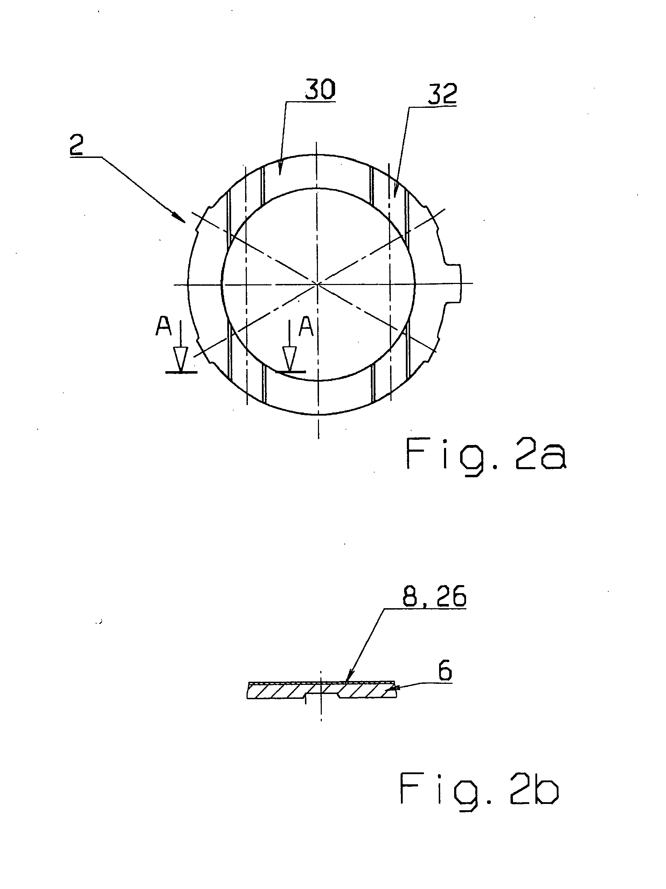

Schließlich zeigen die Figuren 2a, 2b ein Gleitlagerelement 2 in Form einer 360° umfassenden Anlaufscheibe. Figur 2a ist eine Draufsicht auf deren Unterseite 30. Man erkennt Vertiefungen 32, welche Ölnuten bilden, die durch spanabhebende Bearbeitung eingebracht sind. Aus der Schnittansicht gemäß Figur 2b erkennt man die metallische Stützschicht 6 aus Stahl und eine demgegenüber sehr viel dünnere poröse Trägerschicht 8 aus gesintertem Bronzepulver 10, in welche im Spritzgießverfahren Gleitschichtmaterial 26 auf Polymerbasis mit Füllstoffen eingebracht ist.

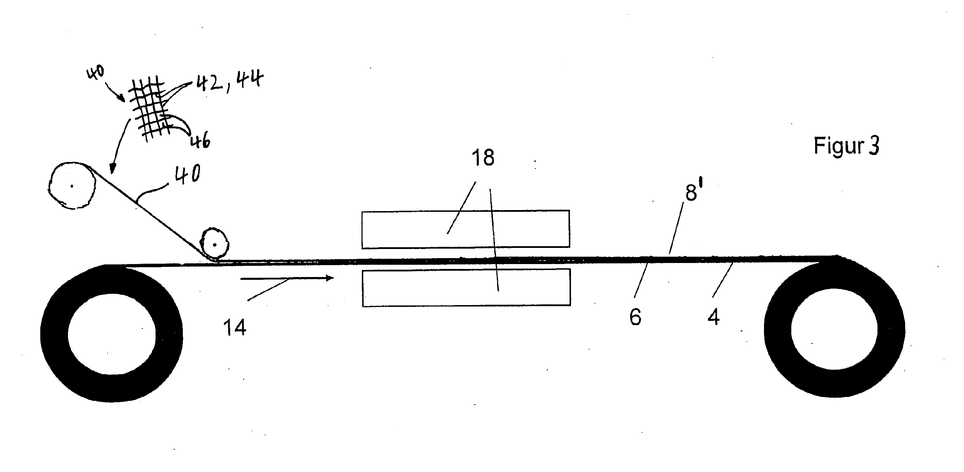

Figur 3 verdeutlicht die zweite Variante der vorliegenden Erfindung, wonach anstelle einer aus aufgesinterten verrundeten metallischen Partikeln gebildeten Trägerschicht eine unterbrochene Schicht 40 aus textil verbundenen Metallfilamenten 42, insbesondere und vorzugsweise in Form eines Gewebes 44 oder Gewirks, als Trägerschicht 8' verwendet wird, welches unlösbar auf die Stützschicht 6 aufgebracht wird. Hierfür hat sich auch ein Sintervorgang als vorteilhaft erwiesen, zumal wenn die textil verbundenen Metallfilamente 42 aus Bronze gebildet sind. Die sehr offene Schicht 40 umfasst eine Vielzahl von Öffnungen 46, durch welche eine unmittelbare Anbindung des polymeren Gleitschichtmaterials 26 direkt an die Oberseite der

Stützschicht 6 möglich ist. Dabei wird durch die Schicht 40 dennoch eine hinreichende Verankerung des polymeren Gleitschichtmaterials 26 erreicht, wenn dieses in einem Spritzgießverfahren aufgebracht wird. Es hat sich gezeigt, dass schon eine einlagige Schicht 40 aus textil verbundenen Metallfilamenten 42 hierfür ausreichend ist. Figur 3 verdeutlicht ferner, wie die Schicht 40 als endlose Bahn, insbesondere Gewebebahn, auf das die metallische Stützschicht 6 bildende Flachmaterial 12 abgelegt und mit der schematisch angedeuteten Sinterstrecke 18 daran fixiert wird.

## Patentansprüche

1. Verfahren zum Herstellen eines Gleitlagerelements (2) mit einem Gleitlagerverbundwerkstoff (4), umfassend eine metallische Stützschicht (6), eine darauf aufgesinterte metallische poröse Trägerschicht (8) und ein in die Poren der Trägerschicht (8) eingebrachtes Gleitschichtmaterial (26) mit einer Polymerbasis und mit Füllstoffen, wobei das Gleitlagerelement aus einem Flachmaterial ausgestanzt oder abgelängt wird, **dadurch gekennzeichnet, dass** zunächst das Flachmaterial mit Stützschicht (6) und poröser Trägerschicht (8) erhalten wird, wobei die poröse Trägerschicht (8) aus verrundeten metallischen Partikeln derart gebildet wird, dass sie in Z-Richtung nur höchstens drei Lagen von miteinander versinterten metallischen Partikeln aufweist, und dass aus dem Flachmaterial die Form und Gestalt eines Rohlings (20) des Gleitlagerelements (2) durch Ausstanzen oder Ablängen und gegebenenfalls Umformen hergestellt wird und dass daran anschließend der Rohling (20) in einem Spritzgießverfahren mit dem Gleitschichtmaterial (26) mit Füllstoffen beaufschlagt wird.

2. Verfahren zum Herstellen eines Gleitlagerelements (2) mit einem Gleitlagerverbundwerkstoff (4), umfassend eine metallische Stützschicht (6), eine darauf aufgebrachte unterbrochene Trägerschicht (8') und ein auf und in die Trägerschicht (8') eingebrachtes Gleitschichtmaterial (26) mit einer Polymerbasis und mit Füllstoffen, wobei das Gleitlagerelement aus einem Flachmaterial ausgestanzt oder abgelängt wird, **dadurch gekennzeichnet, dass** zunächst das Flachmaterial mit Stützschicht (6) und unterbrochener Trägerschicht (8') erhalten wird, wobei die unterbrochene Trägerschicht (8') aus einer Schicht (40) aus textil verbundenen Metallfilamenten (42), insbesondere in Form eines Gewebes (44) oder Gewirks, gebildet ist, welche unlösbar auf die Stützschicht (6) aufgebracht, insbesondere aufgesintert wird, und dass aus dem so erhaltenen Flachmaterial die Form und Gestalt eines Rohlings (20) des Gleitlagerelements (2) durch Ausstanzen oder Ablängen und gegebenenfalls Umformen hergestellt wird und dass daran anschließend der Rohling (20) in einem Spritzgießverfahren mit dem Gleitschichtmaterial (26) mit Füllstoffen beaufschlagt wird.

3. Verfahren nach Anspruch 1 oder 2, **dadurch gekennzeichnet, dass** die poröse Trägerschicht (8, 8') aus Bronze (10), insbesondere aus CuSn (4-10) gebildet wird.

4. Verfahren nach Anspruch 1 oder 3, **dadurch gekennzeichnet, dass** die poröse Trägerschicht (8) eine Dicke von 0,10 - 0,5 mm aufweist.

5. Verfahren nach Anspruch 1, 3 oder 4, **dadurch gekennzeichnet, dass** das Porenvolumen der porösen Trägerschicht (8) im Zuge des Spritzgießens reduziert wird, und dann 40 - 60 %, insbesondere 45 - 60 % und weiter insbesondere 47 - 60 % beträgt.

6. Verfahren nach Anspruch 1, 3, 4 oder 5, **dadurch gekennzeichnet, dass** die Partikelgröße der verrundeten metallischen Partikel 110 - 130 µm beträgt.

7. Verfahren nach einem der vorstehenden Ansprüche, **dadurch gekennzeichnet, dass** die Gesamtdicke des Gleitlagerverbundwerkstoffs und des hieraus hergestellten Gleitlagers 0,5 - 5 mm, insbesondere 0,75 - 4 mm und weiter insbesondere 1,0 - 4 mm beträgt.

8. Verfahren nach einem der vorstehenden Ansprüche,
**dadurch gekennzeichnet, dass** das Gleitschichtmaterial (26) PEEK als matrixbildende Kunststoffkomponente und umfasst.

9. Verfahren nach einem der vorstehenden Ansprüche,
**dadurch gekennzeichnet, dass** das Gleitschichtmaterial (26) Füllstoffe in Form von 3 - 15 Gew.-% Zinksulfid und/oder Bariumsulfat als Schmierstoff und eine härtende Komponente in Form von 3 - 15 Gew.-% Titandioxid und/oder Siliziumcarbid umfasst.

10. Verfahren nach einem der vorstehenden Ansprüche,
**dadurch gekennzeichnet, dass** das Gleitschichtmaterial (26) zusätzlich 5 - 25 Gew.-% Kohlenstofffasern umfasst.

11. Verfahren nach einem der vorstehenden Ansprüche,
**dadurch gekennzeichnet, dass** das Gleitschichtmaterial (26) zusätzlich 5 - 15 Gew.-% Graphitpartikel umfasst.

12. Verfahren nach einem der vorstehenden Ansprüche zum Herstellen einer Anlaufscheibe zur Verwendung bei einer Kurbelwelle bei einem Kraftfahrzeugmotor oder bei einer Einspritzpumpe.

13. Verfahren nach einem der vorstehenden Ansprüche,
**dadurch gekennzeichnet, dass** vor dem Spritzgießen des Gleitschichtmaterials (26) auf der von dem Gleitschichtmaterial abgewandten Seite der Stützschicht (6) Vertiefungen (32), insbesondere durch Spanen oder Prägen, hergestellt werden.

14. Verfahren nach einem der vorstehenden Ansprüche zum Herstellen einer Bundbuchse mit einem Radiallagerteil und einem Axiallagerteil (also der Bund), **dadurch gekennzeichnet, dass** das Gleitschichtmaterial zumindest am Axiallagerteil und gegebenenfalls zusätzlich am Radiallagerteil im Spritzgießverfahren aufgebracht wird.

15. Verfahren nach einem der vorstehenden Ansprüche zum Herstellen eines kalottenförmigen Gleitlagerelements, insbesondere Topfbuchse oder Kugelschale, wobei aus dem Flachmaterial ein rondenförmiger Rohling ausgestanzt und auf Kalottenform tiefgezogen und dann im Spritzgießverfahren mit dem Gleitschichtmaterial mit Füllstoffen beaufschlagt wird.
